# EUROPEAN PATENT APPLICATION

(11) **EP 4 415 153 A1**
(43) Date of publication of application: **14.08.2024**
(21) Application number: 22941023.8
(22) Date of filing: 09.05.2022
(51) Int. Cl.: H01M 50/593, H01M 50/167

(54) **BATTERY CELL, BATTERY AND ELECTRIC DEVICE**

(71) Applicant: Contemporary Amperex Technology Co., Limited, Ningde, Fujian 352100 (CN)
(72) Inventor: PAN, Youcheng, Ningde, Fujian 352100 (CN); JIANG, Liang, Ningde, Fujian 352100 (CN); LUO, Zhixin, Ningde, Fujian 352100 (CN)
(74) Representative: Ziebig Hengelhaupt Intellectual Property Attorneys Patentanwaltskanzlei PartGmbB
(86) International application number: PCT/CN2022/091667
(87) International publication number: WO 2023/216055

(57) **Abstract**

Embodiments of the present application provide a battery cell, a battery, and a power consumption device. The battery cell includes a housing; a cover plate, including a cover plate body part and a first edge part, where the housing and the first edge part are connected in a sealing manner and form a crimping structure turned outwards; and a reinforcing member, disposed on a side of the cover plate body part away from an inner portion of the battery cell, at least part of the reinforcing member being located between an inner side of the crimping structure and the cover plate body part. The battery cell, the battery, and the power consumption device of the embodiments of the present application could improve safety of the battery.

## Description

### TECHNICAL FIELD

The present application relates to the field of battery technologies, and in particular, to a battery cell, a battery, and a power consumption device.

### BACKGROUND

Energy saving and emission reduction are the key to the sustainable development of the automobile industry. In this case, electric vehicles have become an important part of the sustainable development of the automobile industry due to their advantages of energy saving and environmental protection. For electric vehicles, battery technology is an important factor for their development.

With the development of battery technology, in addition to improving the performance of a battery, a safety issue is also a non-negligible problem. A battery cannot be used if the safety of the battery cannot be guaranteed. Therefore, how to enhance the safety of the battery is a technical problem to be solved urgently in the battery technology.

### SUMMARY

Embodiments of the present application provide a battery cell, a battery, and a power consumption device, which could improve safety of the battery.

In a first aspect, a battery cell is provided, including: a housing; a cover plate, including a cover plate body part and a first edge part, where the housing and the first edge part are connected in a sealing manner and form a crimping structure turned outwards; and a reinforcing member, disposed on a side of the cover plate body part away from an inner portion of the battery cell, at least part of the reinforcing member being located between an inner side of the crimping structure and the cover plate body part.

Therefore, the battery cell of an embodiment of the present application is provided with a reinforcing member, and at least part of the reinforcing member is located between the crimping structure and the cover plate body part, such that the reinforcing member can resist at least part of the pressure when the pressure of the inner portion of the battery cell against the cover plate increases due to the swelling of the inner portion of the battery cell, thereby reducing the pressure directly acting on the crimping structure, and increasing the pressure resistance of the crimping structure, so as to improve safety of the battery cell.

In some embodiments, the reinforcing member is in contact with an inner surface of the crimping structure, such that there is no gap or a very small gap between the reinforcing member and the inner surface of the crimping structure. The stability of the reinforcing member is ensured, and during the use of the battery, the reinforcing member will not be displaced relative to the crimping structure or even fall off due to vibration, thereby ensuring that the reinforcing member can increase the strength of the crimping structure.

In some embodiments, the reinforcing member is ring-shaped. This not only facilitates processing but also reduces the weight of the reinforcing member, so as to reduce the overall weight of the battery cell and also reduce the weight of the battery.

In some embodiments, a cross section of the reinforcing member along a first plane is substantially a polygon, and the first plane passes through a central axis of the battery cell. The cross section of the reinforcing member along the first plane is generally not a circle or an ellipt but is set as a polygon, which can avoid the movement of the reinforcing member and improve the stability of the reinforcing member.

In some embodiments, the polygon is a triangle or a quadrangle to facilitate processing.

In some embodiments, the reinforcing member includes a reinforcing member body part and an extension part that are connected, the reinforcing member body part is located between the inner side of the crimping structure and the cover plate body part, and the extension part extends outwards from the reinforcing member body part in a direction of a central axis of the battery cell, and thus, the stability and strength of the reinforcing member are increased by the extension part.

In some embodiments, the reinforcing member is a solid structure, so as to increase the structural strength of the reinforcing member, that is, to improve the compressive strength of the reinforcing member, thereby improving the pressure resistance of the crimping structure and reducing the risk of failure of the crimping structure.

In some embodiments, a first surface of the reinforcing member is parallel to an inner surface of the crimping structure, a second surface of the reinforcing member is parallel to the cover plate body part, and a range of an included angle between the first surface and the second surface is (0°, 60°], so that the strength of the reinforcing member is not affected and the risk of failure of the crimping structure is not increased, due to the fact that an angle required for the reinforcing member to be completely turned up is too small when the included angle is too small.

In some embodiments, a fillet is provided at an intersection of the first surface and the second surface, so as to avoid stress concentration at the intersection of the first surface and the second surface and also avoid stress concentration at the intersection of the first edge part of the cover plate and the cover plate body part, thereby improving the strength of the reinforcing member and the cover plate.

In some embodiments, a range of a radius of the fillet is [0.5mm, 2mm], which avoids stress concentration due to too small radius of the fillet, and also avoids excessive gap between the fillet of the reinforcing member and the cover plate due to too large radius of the fillet, thereby causing a waste of space and possibly reducing the strength of the reinforcing member.

In some embodiments, a third surface and the second surface of the reinforcing member intersect, and a range of an included angle between the third surface and the second surface is [80°, 90°], so as to increase the stability and strength of the reinforcing member.

In some embodiments, a length of the first surface in a first direction is greater than a length of the inner surface of the crimping structure in the first direction, so as to improve the strength of the reinforcing member. The first direction is parallel to the first surface and perpendicular to an intersection line of the first surface and the second surface.

In some embodiments, the first surface of the reinforcing member is deformed to be parallel to a central axis of the battery cell when a pressure of the inner portion of the battery cell against the reinforcing member is greater than or equal to 0.5 MPa.

In view of the fact that, during the use of the battery cell, the range of the maximum pressure of the inner portion of the battery cell is generally [0.5 MPa, 2.5 MPa], and thus the compressive strength of the reinforcing member is set to be greater than 0.5 MPa, that is, when it is set that the pressure of the inner portion of the battery cell against the reinforcing member does not exceed 0.5 MPa, the reinforcing member will not fail and will not be completely turned over. If the compressive strength of the reinforcing member is set to be excessively small, the design requirements for the compressive strength of the battery cell may not be satisfied, and the pressure resistance of the crimping structure cannot be effectively improved.

In some embodiments, a material of the reinforcing member includes at least one of aluminum alloy, steel, and titanium alloy. In the case where the maximum pressure of the inner portion of the battery cell is relatively small, the requirement for the compressive strength of the reinforcing member is also relatively low, and in this case, the material of the reinforcing member may be aluminum alloy to make the reinforcing member light in weight. In the case where the maximum pressure of the inner portion of the battery cell is relatively large, the requirement for the compressive strength of the reinforcing member is also relatively high, and in this case, the material of the reinforcing member may be steel, so that the compressive strength of the reinforcing member satisfies the requirement.

In some embodiments, the housing includes a housing body part and a second edge part, the second edge part is close to an opening of the housing, and the second edge part and the first edge part are wound to form the crimping structure.

Compared with other methods of sealing the housing and the cover plate, the crimping structure formed by winding is not only convenient for processing, but also improves the processing efficiency of the battery cell and can ensure the sealing of the housing and the cover plate.

In some embodiments, the crimping structure includes a converging part and a winding part; the first edge part and the second edge part converge and are connected at the converging part; and the winding part is connected to the converging part, and is wound outwards from the converging part to form the winding part. Such a crimping structure can improve the air tightness between the housing and the cover plate.

In some embodiments, a first surface of the reinforcing member is in contact with an inner surface of the converging part, such that the reinforcing member may be more stable.

In some embodiments, a portion of the housing body part close to the second edge part is provided with a stepped part extending towards a central axis of the housing, and the stepped part is configured such that a maximum distance from the crimping structure to the central axis of the housing is less than or equal to a maximum distance from the housing body part to the central axis of the housing.

The stepped part is provided, such that the outermost side of the crimping structure does not exceed the outermost side of the housing body part, which is convenient for the assembly of a plurality of battery cells and improves the space utilization rate of the battery.

In some embodiments, a sealant is filled between the first edge part and the second edge part, so as to increase the air tightness of the crimping structure and improve the sealing effect of the crimping structure.

In some embodiments, the housing is of a hollow structure with openings at two ends, the battery cell includes two cover plates, and the two cover plates are configured to cover the openings at the two ends respectively, so that an electrode assembly may be assembled into the housing through any opening, which is also convenient for the assembly of other components in the housing and improves the assembly efficiency.

In some embodiments, the battery cell is a cylinder, the cover plate is a circle, and the reinforcing member is in a shape of a circular ring. The shapes of the reinforcing member, the cover plate, and the housing match each other, so as to ensure the sealing of the crimping structure and the stability and strength of the reinforcing member.

In a second aspect, a battery is provided, including: the battery cell according to the first aspect.

In a third aspect, a power consumption device is provided, including the battery cell according to the first aspect, where the battery cell is configured to provide electric energy for the power consumption device.

In some embodiments, the power consumption device is a vehicle, ship or spacecraft.

### BRIEF DESCRIPTION OF THE DRAWINGS

FIG. 1 is a schematic structural diagram of a vehicle disclosed in an embodiment of the present application;
FIG. 2 is a schematic diagram of a battery cell disclosed in an embodiment of the present application;
FIG. 3 is a schematic top view of a battery cell disclosed in an embodiment of the present application;
FIG. 4 is a schematic cross-sectional view of a battery cell disclosed in an embodiment of the present application;
FIG. 5 is a schematic partial cross-sectional view of a battery cell disclosed in an embodiment of the present application;
FIG. 6 is a schematic structural diagram of a reinforcing member according to an embodiment of the present application;
FIG. 7 is a schematic partial cross-sectional view of a reinforcing member disclosed in an embodiment of the present application;
FIG. 8 is a schematic partial cross-sectional view of another reinforcing member disclosed in an embodiment of the present application;
FIG. 9 is a schematic partial cross-sectional view of yet another reinforcing member disclosed in an embodiment of the present application;
FIG. 10 is a schematic partial cross-sectional view of still another reinforcing member disclosed in an embodiment of the present application.

In accompanying drawings, the accompanying drawings are not drawn to actual scale.

### DESCRIPTION OF EMBODIMENTS

The implementation manner of the present application will be further described in detail below with reference to the drawings and embodiments. The following detailed description of the embodiments and the accompanying drawings are used to illustrate the principles of the present application in examples, but not to limit the scope of the present application, that is, the present application is not limited to the described embodiments.

In the description of the present application, it should be noted that the phrase "a plurality of" means two or more, unless otherwise specified. Orientations or positional relationships indicated by terms "upper", "lower", "left", "right", "inner", "outer", or the like are only for the convenience of describing the present application and simplifying the description, and do not indicate or imply that an apparatus or element referred to must have a specific orientation, be constructed and operated in a specific orientation, and therefore cannot be understood as limitations to the present application. In addition, terms such as "first", "second" and "third" are only used for descriptive purposes, and should not be understood as indicating or implying relative importance. "Vertical" is not vertical in a strict sense, but within an allowable range of error. "Parallel" is not parallel in a strict sense, but within an allowable range of error.

Orientation words appearing in the following description are all directions shown in the drawings, and are not intended to limit the specific structure of the present application. In the description of the present application, it should be further noted that unless otherwise explicitly specified and defined, terms such as "installation", "interconnection", and "connection" should be interpreted in a broad sense, for example, it may be a fixed connection, or a detachable connection, or an integrated connection; or it may be a direct connection, or an indirect connection through an intermediate medium. Those of ordinary skill in the art can understand the specific meanings of the above terms in the present application according to specific situations.

In the embodiments of the present application, same components are denoted by same reference numerals, and detailed description of the same components is omitted in different embodiments for brevity. It should be understood that dimensions such as thicknesses, lengths and widths of various components in embodiments of the present application shown in the accompanying drawings, as well as dimensions of the overall thickness, length and width of an integrated apparatus are merely illustrative, and should not constitute any limitation to the present application.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. The battery cell may be cylindrical, flat, cuboid or in another shape, which is not limited by the embodiment of the present application. The battery cells are generally divided into three types according to the way of packaging: cylindrical battery cells, prismatic battery cells and pouch battery cells, which is not limited by the embodiment of the present application.

The battery mentioned in the embodiment of the present application refers to a single physical module that includes one or more battery cells to provide a higher voltage and capacity. For example, the battery mentioned in the present application may include a battery module, a battery pack, and the like. The battery generally includes a box for packaging one or more battery cells. The box can prevent liquid or other foreign matters from affecting the charging or discharging of a battery cell.

The battery cell includes an electrode assembly and an electrolytic solution, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and a positive electrode current collector not coated with the positive electrode active material layer protrudes from the positive electrode current collector coated with the positive electrode active material layer and is used as a positive tab. Taking a lithium-ion battery as an example, the material of the positive electrode current collector may be aluminum, and the positive electrode active material may be lithium cobalt oxides, lithium iron phosphate, ternary lithium or lithium manganate, etc. The negative electrode sheet includes a negative electrode current collector and a negative electrode active material layer. The negative electrode active material layer is coated on a surface of the negative electrode current collector, and a negative electrode current collector not coated with the negative electrode active material layer protrudes from the negative electrode current collector coated with the negative electrode active material layer and is used as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together. A material of the separator may be polypropylene (polypropylene, PP), polyethylene (polyethylene, PE), or the like. In addition, the electrode assembly may be in a winding structure or a laminated structure, and the embodiments of the present application are not limited thereto.

With the development of the battery technology, it is necessary to consider many design factors, such as energy density, cycle life, discharge capacity, C-rate and other performance parameters. In addition, the safety of the battery should also be considered. For a battery, the main safety hazards come from charging and discharging processes. For example, during the charging and discharging processes, the temperature of a battery cell increases, then the battery cell swells, and the internal pressure of the battery cell increases. Therefore, a certain strength is required for the sealing between a cover plate and a housing to ensure that the battery cell is not prone to failure.

In an embodiment of the present application, a battery cell is provided. A housing of the battery cell and a first edge part of a cover plate are connected in a sealing manner and form a crimping structure turned outwards. A reinforcing member is disposed on a side of a cover plate body part away from an inner portion of the battery cell. At least part of the reinforcing member is located between the crimping structure and the cover plate body part, such that the reinforcing member can resist at least part of the pressure when the pressure of the inner portion of the battery cell against the cover plate increases due to the swelling of the inner portion of the battery cell, thereby reducing the pressure directly acting on the crimping structure, and increasing the pressure resistance of the crimping structure, so as to improve safety of the battery cell.

The technical solutions described in the embodiments of the present application are all applicable to various power consumption devices using batteries.

The power consumption device may be a vehicle, a mobile phone, a portable device, a notebook computer, a ship, a spacecraft, an electric toy, an electric tool, or the like. The vehicle may be a fuel-powered vehicle, a gas-powered vehicle or a new energy vehicle, and the new energy vehicle may be a battery electric vehicle, a hybrid vehicle, an extended-range vehicle, or the like. The spacecraft includes an airplane, a rocket, a space shuttle, a spaceship, or the like. The electric toy includes a fixed or movable electric toy, such as a game console, an electric vehicle toy, an electric ship toy, and an electric airplane toy. The electric tool includes an electric metal cutting tool, an electric grinding tool, an electric assembling tool, and an electric railway tool, such as an electric drill, an electric grinder, an electric spanner, an electric screwdriver, an electric hammer, an electric impact drill, a concrete vibrator, and an electric planer. The embodiments of the present application do not specifically limit the foregoing power consumption device.

For ease of description, the following embodiments are described by taking a power consumption device as a vehicle as an example.

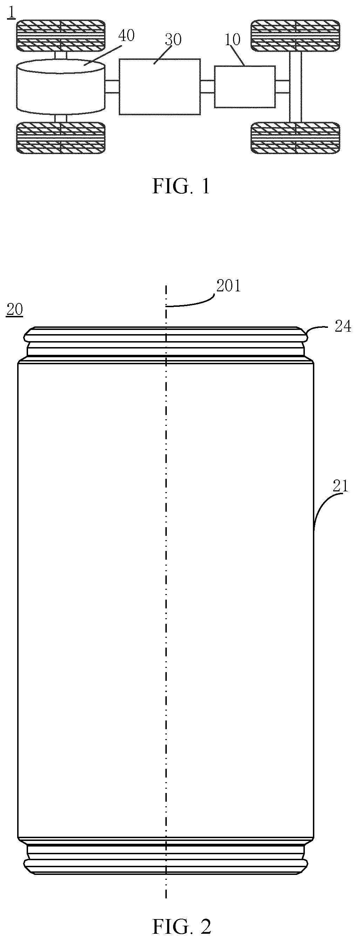

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be disposed inside the vehicle 1, and the controller 30 is configured to control the battery 10 to supply power to the motor 40. For example, the battery 10 may be disposed at the bottom, head or tail of the vehicle 1. The battery 10 may be used for supplying power to the vehicle 1. For example, the battery 100 may serve as an operation power supply of the vehicle 1, and is used for a circuit system of the vehicle 1, for example, for a working power demand of the vehicle 1 during startup, navigation, and running. In another embodiment of the present application, the battery 10 can not only serve as an operation power supply of the vehicle 1, but also as a driving power supply of the vehicle 1, replacing or partially replacing fuel or natural gas to provide driving power for the vehicle 1.

In order to meet different power requirements, the battery may include a plurality of battery cells. The plurality of battery cells may be in series connection, parallel connection or series-parallel connection. The series-parallel connection refers to a combination of series connection and parallel connection. The battery may also referred to as a battery pack. Optionally, the plurality of battery cells may be first connected in series, in parallel or in series-parallel to form a battery module, and then a plurality of battery modules are connected in series or in parallel or in series-parallel to form a battery. That is, the plurality of battery cells may form the battery directly, or form a battery module first, and then battery modules form the battery.

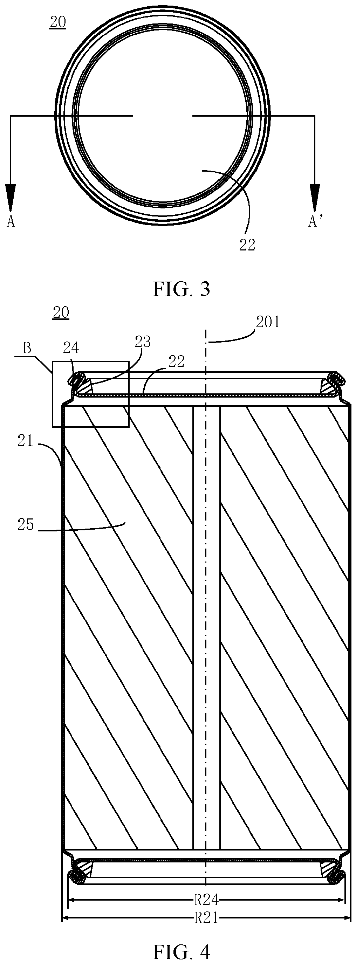

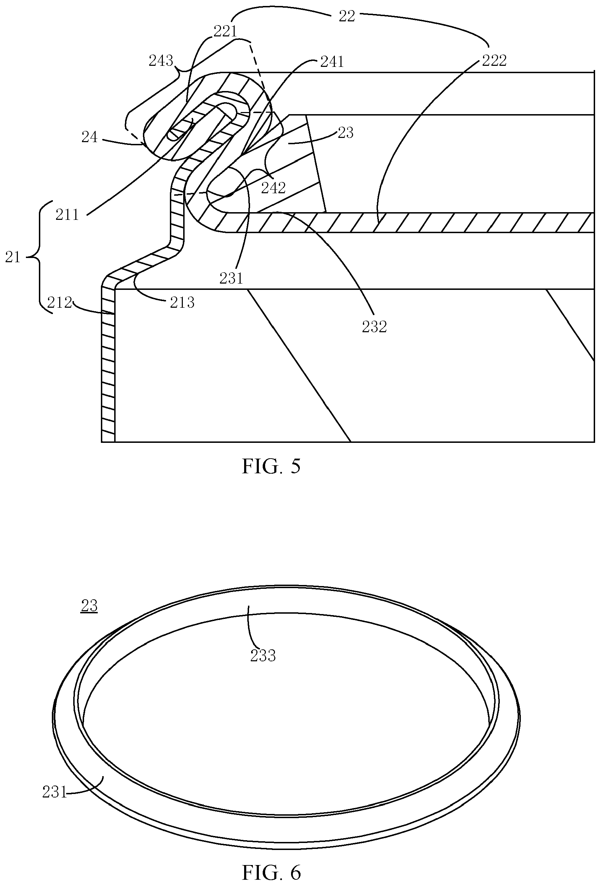

FIG. 2 shows a schematic diagram of a battery cell 20 according to an embodiment of the present application. FIG. 3 shows a schematic top view of a battery cell 20 according to an embodiment of the present application. FIG. 4 shows a schematic cross-sectional view of a battery cell 20 according to an embodiment of the present application, where this cross-sectional schematic view may be a schematic cross-sectional view in an A-A' direction as shown in FIG. 3. FIG. 5 shows a partial schematic cross-sectional view of a battery cell 20 according to an embodiment of the present application. FIG. 5 may be an enlarged view of a partial area B of the battery cell 20 shown in FIG. 4. As shown in FIGS. 2 to 4, in an embodiment of the present application, a battery cell 20 includes: a housing 21; a cover plate 22, including a cover plate body part 222 and a first edge part 221, where the housing 21 and the first edge part 221 are connected in a sealing manner and form a crimping structure 24 turned outwards; and a reinforcing member 23, disposed on a side of the cover plate body part 222 away from an inner portion of the battery cell, at least part of the reinforcing member 23 being located between an inner side of the crimping structure 24 and the cover plate body part 222.

It should be understood that in the embodiment of the present application, the reinforcing member 23 disposed on a side of the cover plate body part 222 away from an inner portion of the battery cell 20 may include: the reinforcing member 23 is directly disposed on a surface of the cover plate body part 222 away from the inner portion of the battery cell 20, or the reinforcing member 23 is indirectly disposed on a surface of the cover plate body part 222 away from the inner portion of the battery cell 20 through other components. For example, other components such as a fixing structure, may be provided between the reinforcing member 23 and the cover plate body part 222, but the embodiment of the present application is not limited thereto.

In the embodiment of the present application, the housing 21 and the first edge part 221 being connected in a sealing manner and form a crimping structure 24 turned outwards means that the crimping structure 24 is located at an exterior portion of the battery cell 20, that is, the housing 21 and the first edge part 221 are turned over towards the exterior portion of the battery cell to form the crimping structure 24.

In the embodiment of the present application, at least part of the reinforcing member 23 is located between an inner side of the crimping structure 24 and the cover plate body part 222, and the inner side of the crimping structure 24 represents a side of the crimping structure 24 facing towards a central axis 201 of the battery cell 20. For example, at least a partial area of the reinforcing member 23 may be in contact with a surface of the crimping structure 24 facing toward the central axis 201 of the battery cell 20, and also be in contact with an outer surface of the cover plate body part 222.

Therefore, the battery cell 20 of an embodiment of the present application is provided with a reinforcing member 23, and at least part of the reinforcing member 23 is located between the crimping structure 24 and the cover plate body part 222, such that the reinforcing member 23 can resist at least part of the pressure when the pressure of the inner portion of the battery cell 20 against the cover plate 22 increases due to the swelling of the inner portion of the battery cell 20, thereby reducing the pressure directly acting on the crimping structure 24, and increasing the pressure resistance of the crimping structure 24, so as to improve safety of the battery cell 20. For example, for a cylindrical battery cell with a diameter of 64 millimeters (mm), if the reinforcing member 23 is not provided, the compressive strength of the crimping structure is generally only 0.8Mpa to 0.9Mpa, and the compressive strength of a pressure relief mechanism provided by means of indentation is generally 1.7Mpa, which is higher than the compressive strength of the crimping structure, therefore, when the internal pressure of the battery cell 20 exceeds an upper limit of the compressive strength of the crimping structure, the crimping structure may fail prior to the pressure relief mechanism, which in turn leads to the failure of the battery cell. However, the reinforcing member 23 added between the crimping structure 24 and the cover plate body part 222 can resist part of the pressure, and the crimping structure 24 may fail only when the reinforcing member 23 fails, thereby improving the pressure resistance of the crimping structure 24, and it can also make the pressure relief mechanism fail prior to the crimping structure, thereby improving the safety of the battery cell 20.

It should be understood that in the embodiment of the present application, the housing 21 is a component for accommodating an electrode assembly 25, and the housing 21 may be of a hollow structure with an opening formed at at least one end. For example, if the housing 21 is of a hollow structure with an opening formed at one end, one cover plate 22 may be provided to cover the opening of the housing 21. Alternatively, as shown in FIG. 2 to FIG. 5, the housing 21 may also be of a hollow structure with openings formed at opposite ends, so that two cover plates 22 may be provided, and the two cover plates 22 cover the openings at both ends of the housing 21, respectively. The embodiment of the present application mainly takes a housing 21 being of a hollow structure with openings formed at opposite ends as an example, that is, the housing 21 being of a hollow structure with openings at both ends, the battery cell 20 includes two cover plates 22, and the two cover plates 22 are respectively configured to cover the openings at both ends, so that the electrode assembly 25 can be assembled into the housing 21 through any opening, and it also facilitates the assembly of other components in the housing 21, thereby improving the assembly efficiency.

Optionally, the housing 21 in the embodiment of the present application may be made of various materials, such as copper, iron, aluminum, steel, aluminum alloy, or the like. The housing 21 may be of various shapes, such as a cylinder or cuboid. Exemplarily, in each of the drawings of the embodiments of the present application, the housing 21 is of a cylindrical structure.

The cover plate 22 in the embodiment of the present application is a component that covers the opening of the housing 21 to isolate the internal environment of the battery cell 20 from the external environment. The material of the cover plate 22 may also be various, such as copper, iron, aluminum, steel, aluminum alloy, or the like, and the material of the cover plate 22 may be the same as or different from the material of the housing 21.

It should be understood that the shape of the cover plate 22 may match the shape of the housing 21. For example, when the housing 21 is in a cuboid structure, the cover plate 22 may be a plate-shaped structure adapted to the housing 21, or may also be of a hollow cuboid structure with an opening 213 at one end, so that a cuboid battery cell 20 is formed after the cover plate 22 and the housing 21 are covered. For another example, as shown in FIG. 2 to FIG. 5, when the housing 21 of the embodiment of the present application is a cylinder, the cover plate 22 may also be of a circular plate shape, or a bottom wall of the cover plate 22 is of a circular groove structure, so that a cylindrical battery cell 20 is formed after the cover plate 22 and the housing 21 are covered. The following description mainly takes the cover plate 22 being a circular plate shape as an example, but the embodiment of the present application is not limited thereto.

In the embodiment of the present application, the housing 21 may be configured to accommodate the electrode assembly 25, and the battery cell 20 may also include an electrode terminal, and the electrode terminal is configured to be electrically connected to the electrode assembly 25 to output the electric energy of the battery cell 20. The electrode terminal may include a positive electrode terminal and a negative electrode terminal, where the positive electrode terminal is configured to be electrically connected to a positive tab of the electrode assembly 25, and the negative electrode terminal is configured to be electrically connected to a negative tab of the electrode assembly 25. The positive electrode terminal and the positive tab may be connected directly or indirectly, and the negative electrode terminal and the negative tab may be connected directly or indirectly. For example, the positive electrode terminal may be electrically connected to the positive tab by using a connecting member, and the negative electrode terminal may be electrically connected to the negative tab by using a connecting member.

Optionally, the two electrode terminals included in the battery cell 20 may be disposed on any wall of the battery cell 20, or may be disposed on different walls of the battery cell 20. For example, for a cylindrical battery cell 20, two electrode terminals may be respectively disposed on two circular bottom walls of the battery cell 20, so as to realize an electrical connection between the plurality of battery cells 20. However, the embodiment of the present application is not limited thereto.

Optionally, the battery cell 20 of the embodiment of the present application may also have other structures. For example, the battery cell 20 may also be provided with a liquid injection hole configured to inject an electrolyte to the inner portion of the battery cell 20. For another example, the battery cell 20 may also be provided with a pressure relief mechanism configured to be actuated when an internal pressure or temperature of the battery cell 20 reaches a predetermined threshold, to relieve the internal pressure or temperature. For the sake of brevity, details are not repeated here.

It should be understood that at least part of the reinforcing member 23 of the embodiment of the present application is located between the crimping structure 24 and the cover plate body part 222, and the reinforcing member 23 may be set to be in contact with an inner surface 241 of the crimping structure 24, such that there is no gap or a very small gap between the reinforcing member 23 and the inner surface 241 of the crimping structure 24. The stability of the reinforcing member 23 is ensured, and during the use of the battery 10, the reinforcing member 23 will not be displaced relative to the crimping structure 23 or even fall off due to vibration, thereby ensuring that the reinforcing member 23 can increase the strength of the crimping structure 24.

A crimping structure 24 of an embodiment of the present application will be described in detail below with reference to the accompanying drawings. In the embodiment of the present application, the housing 21 and the first edge part 221 of the cover plate 22 are connected in a sealing manner and form a crimping structure 24 turned outwards. Specifically, the housing 21 includes a housing body part 212 and a second edge part 211, the second edge part 211 is close to an opening of the housing 21; and the second edge part 211 and the first edge part 221 are wound to form the crimping structure 24. Compared with other methods of sealing the housing 21 and the cover plate 22, the crimping structure 24 formed by winding is not only convenient for processing, but also improves the processing efficiency of the battery cell 20 and can ensure the sealing of the housing 21 and the cover plate 22.

As shown in FIG. 2 to FIG. 5, the crimping structure 24 includes a converging part 242 and a winding part 243; the first edge part 221 and the second edge part 211 converge and are connected at the converging part 242; and the winding part 243 is connected to the converging part 242, and is wound outwards from the converging part 242 to form the winding part 243. Specifically, the crimping structure 24 of the embodiment of the present application can be divided into a converging part 242 and a winding part 243 that are connected, wherein an area of the first edge part 221 closest to the cover plate body part 222 converges with and is connected to an area of the second edge part 211 closest to the housing body part 212 to form the converging part 242 of the crimping structure 24. The first edge part 221 and the second edge part 211 converge and then bent towards the exterior of the battery cell 20 and are further wound to form the winding part 243 connected to the converging part 242. The winding direction of the crimping structure 24 may be counterclockwise as shown in FIG. 5, that is, the first edge part 221 and the second edge part 211 converge, and then bent and wound in a direction away from the central axis 201 of the battery cell 20; and alternatively, different from this, the winding direction of the winding structure 24 may also be clockwise, that is, the first edge part 221 and the second edge part 211 converge and then bent and wound in a direction close to the central axis 201 of the battery cell 20, the embodiment of the present application is not limited thereto. For ease of description, the embodiment of the present application is described by taking the counterclockwise direction shown in FIG. 5 as an example.

Optionally, a sealant is filled between the first edge part 221 and the second edge part 211, that is, a sealing member may be provided in the converging part 242 and the winding part 243, so as to increase the air tightness of the crimping structure 24 and improve the sealing effect of the crimping structure 24.

Optionally, the number of winding layers of the crimping structure 24 of the embodiment of the present application may be set according to practical applications. For example, if the number of winding layers of the winding structure 24 is too large, the volume and the weight of the winding structure 24 are larger, which not only increases the space occupied by the battery cell 20, but also increases the weight of the battery cells 20, thereby reducing the energy density of the battery 10. On the contrary, if the number of winding layers of the crimping structure 24 is too small, the crimping structure 24 may be unstable, and the sealing effect is also poor. Therefore, the number of winding layers of the crimping structure 24 may generally be set to be five or six. For example, the crimping structure 24 shown in FIG. 5 includes five layers in total, where the converging part 242 includes one layer of the first edge part 221 and one layer of the second edge part 211, and the winding part 243 includes two layers of the first edge part 221 and one layer of the second edge part 211, so as to ensure the sealing effect.

It should be understood that, when the crimping structure 24 is formed by winding in the above manner, the reinforcing member 23 is in contact with the inner surface 241 of the crimping structure 24, that is, a first surface 231 of the reinforcing member 23 is in contact with the inner surface of the converging part 242. For example, the inner surface of the converging part 242 may be a surface of the first edge part 221 away from the inner portion of the battery cell 20, so that the reinforcing member 23 may be more stable.

It should be understood that, in an embodiment of the present application, a portion of the housing body part 212 close to the second edge part 211 is provided with a stepped part 213 extending towards a central axis of the housing 21, and the stepped part 213 is configured such that a maximum distance from the crimping structure 24 to the central axis of the housing 21 is less than or equal to a maximum distance from the housing body part 212 to the central axis of the housing 21. As shown in FIG. 2 to FIG. 5, the crimping structure 24 turned outwards may increase the volume of the battery cell 20, and in order to improve the space utilization rate of the battery 10, it can be set that a position of the housing body part 212 close to the opening is provided with the stepped part 213. The closer the stepped part 213 is to the second edge part 211, the closer to the central axis of the housing 21, and the closer to the central axis of the housing 21, such that the dimension of the housing body part 212 close to the opening in the radial direction decreases. In this way, the crimping structure 24 can be set not to exceed the outermost side of the housing body part 212, that is, the maximum distance from the crimping structure 24 to the central axis of the housing 21 is less than or equal to the maximum distance from the housing body part 212 to the central axis of the housing 21. For example, as for the cylindrical battery cell 20, as shown in FIG. 4, the maximum value R24 of the crimping structure 24 of the diameter at different positions is less than or equal to the maximum value R21 of the housing body part 212 of the diameter at different positions. Therefore, it facilitates the assembly of a plurality of battery cells 20 and improves the space utilization rate of the battery 10.

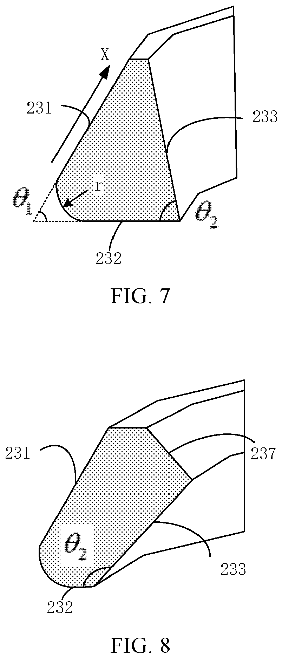

A reinforcing member 23 of an embodiment of the present application will be described in detail below with reference to the accompanying drawings. FIG. 6 shows a schematic structural diagram of a reinforcing member 23 according to an embodiment of the present application. For example, the reinforcing member 23 shown in FIG. 6 may be the reinforcing member 23 shown in FIG. 2 to FIG. 5. FIG. 7 is a schematic partial cross-sectional view of a reinforcing member 23 according to an embodiment of the present application, where this schematic cross-sectional view may be a schematic partial cross-sectional view of the reinforcing member 23 along a plane passing through a central axis 201 of a battery cell 20 as shown in FIG. 6.

Optionally, in an embodiment of the present application, the reinforcing member 23 is a solid structure, so as to increase the structural strength of the reinforcing member 23, that is, to increase the compressive strength of the reinforcing member 23, thereby improving the pressure resistance of the crimping structure 24 and reducing the risk of failure of the crimping structure 24.

Optionally, the shape of the reinforcing member 23 in the embodiment of the present application may be set according to actual applications. As shown in FIG. 6 and FIG. 7, the reinforcing member 23 is ring-shaped, which is not only convenient for processing but also reduces the weight of the reinforcing member 23, so as to reduce the overall weight of the battery cell 20 and thus reduce the weight of the cell 10. For another example, the shape of the reinforcing member 23 is related to the shape of the crimping structure 24. Taking the cylindrical battery cell 20 as an example, the crimping structure 24 surrounds the opening of the housing 21, that is, the crimping structure 24 is ring-shaped, and the shape of the reinforcing member 23 may also be a ring. Alternatively, if the battery cell 20 is a cuboid and the crimping structure 24 surrounds the opening of the housing 21, the crimping structure 24 is a rectangular ring, and correspondingly, the shape of the reinforcing member 23 is also a rectangular ring.

In an embodiment of the present application, as shown in FIG. 6 and FIG. 7, the reinforcing member 23 is at least partially disposed between the inner side of the crimping structure 24 and the cover plate body part 222, where a first surface 231 of the reinforcing member 23 is parallel to an inner surface 241 of the crimping structure 24, and a second surface 232 of the reinforcing member 23 is parallel to the cover plate body part 222, and a range of an included angle *θ*₁ between the first surface 231 and the second surface 232 is (0°, 90°). In this way, the first surface 231 of the reinforcing member 23 is inclined rather than parallel relative to the central axis 201 of the battery cell 20.

When the pressure of the inner portion of the battery cell 20 gradually increases, the cover plate 22 may be deformed under the action of the internal pressure, for example, the cover plate 22 may arch towards the exterior of the battery cell 20. In addition, the reinforcing member 23 provided also changes, that is, the reinforcing member 23 is turned towards the exterior of the battery cell 20, and the reinforcing member 23 can offset most of the internal pressure, so as to reduce deformation of the cover plate 22, that is, to reduce arching of the cover plate 22. In addition, when the reinforcing member 23 is turned outwards, the reinforcing member 23 exerts an acting force on the crimping structure 24, and this acting force enables a frictional force between various layers of the crimping structure 24 to increase, that is, the frictional force between the first edge structure 221 and the second edge structure 211 increases, so that failure caused by the changing of the relative positions of the housing 21 and the cover plate 22 can be prevented, and the airtightness between the housing 21 and the cover plate 22 can be increased.

Moreover, the internal pressure of the battery cell 20 first acts on the reinforcing member 23 instead of directly acting on the crimping structure 24. Specifically, in the case where the reinforcing member 23 is provided, during the process in which the internal pressure of the battery cell 20 gradually increases, only when the reinforcing member 23 is completely turned up under the action of internal pressure, that is, when the first surface 231 of the reinforcing member 23 is inclined to be turned outwards until the first surface 231 is parallel to the central axis 201 of the battery cell 20, may the reinforcing member 23 fail. Correspondingly, the crimping structure 23 also fails due to being directly subjected to the internal pressure. Therefore, whether the crimping structure 23 in the embodiment of the present application fails is related to the compressive strength of the reinforcing member 23, where the compressive strength of the reinforcing member 23 refers to the minimum internal pressure required when the reinforcing member 23 is completely turned up. In the case where the reinforcing member 23 is not provided, whether the crimping structure 23 fails is only related to the compressive strength of the crimping structure 23 itself, where the compressive strength of the crimping structure 23 itself refers to the minimum internal pressure required at the time of failure of the crimping structure 23 due to deformation when the internal pressure of the battery cell 20 directly acts on the crimping structure 23. Then, in a case where the compressive strength of the crimping structure 23 itself is the same, as compared with a case where the reinforcing member 23 is not provided, whether the crimping structure 23 of the embodiment of the present application fails is related to the strength of the reinforcing member 23, and the failure of the crimping structure 23 can be avoided by increasing the compressive strength of the reinforcing member 23.

Optionally, the compressive strength of the reinforcing member 23 may be set according to actual application. For example, the compressive strength of the reinforcing member 23 is generally set to be greater than that of the crimping structure 23 itself, so as to improve the safety of the battery cell 20. For another example, the compressive strength of the reinforcing member 23 is generally set to be greater than or equal to the maximum pressure of inner portion of the battery cell 20, so as to avoid the reinforcing member 23 from failing under the internal pressure of the battery cell 20.

For example, during the use of the battery cell 20, a range of the maximum internal pressure of the battery cell 20 is generally [0.5 MPa, 2.5 MPa]. Therefore, the compressive strength of the reinforcing member 23 is generally set to be greater than or equal to 0.5 MPa, that is, the compressive strength of the reinforcing member 23 generally satisfies: when the pressure of the inner portion of the battery cell 20 against the reinforcing member 23 is greater than or equal to 0.5 MPa, the first surface 231 of the reinforcing member 23 is deformed to be parallel to the central axis 201 the battery cell 20. In other words, when the pressure of the inner portion of the battery cell 20 against the reinforcing member 23 does not exceed 0.5 MPa, the reinforcing member 23 may not fail and not be completely turned up. If the compressive strength of the reinforcing member 23 is set to be excessively small, the design requirements for the pressure resistance of the battery cell 20 may not be satisfied, and the pressure resistance of the crimping structure 23 cannot be effectively improved.

On the contrary, if the compressive strength of the reinforcing member 23 is set too high, the processing requirements for the reinforcing member 23 increases, which increases the processing difficulty of the reinforcing member 23, and may also increase the weight of the reinforcing member 23, thereby reducing the processing efficiency of the battery cell 20. Therefore, the compressive strength of the reinforcing member 23 is generally also set to be less than or equal to 2.5 MPa. For another example, the compressive strength of the reinforcing member 23 is generally set to 1.5 MPa, but this embodiment of the present application is not limited thereto.

Optionally, the material of the reinforcing member 23 in the embodiment of the present application may be set according to actual applications. For example, the material of the reinforcing member 23 includes at least one of aluminum alloy, steel, and titanium alloy. For another example, in the case where the maximum pressure of the inner portion of the battery cell 20 is relatively small, the requirement for the compressive strength of the reinforcing member 23 is also relatively low, and in this case, the material of the reinforcing member 23 may be aluminum alloy to make the reinforcing member 23 light in weight. For another example, in the case where the maximum pressure of the inner portion of the battery cell 20 is relatively large, the requirement for the compressive strength of the reinforcing member 23 is also relatively high, and in this case, the material of the reinforcing member 23 may be tool steel, so that the compressive strength of the reinforcing member 23 satisfies the requirement.

Optionally, the specific value of the included angle *θ*₁ between the first surface 231 and the second surface 232 in the embodiment of the present application may be flexibly set according to practical applications. For example, as shown in FIG. 6 and FIG. 7, a range of an included angle *θ*₁ between a first surface 231 and a second surface 232 is (0°, 60°], so that the strength of the reinforcing member 23 is not affected and the risk of failure of the crimping structure 24 is not increased, due to the fact that an angle required for the reinforcing member 23 to be completely turned up is too small when the included angle *θ*₁ is too large or is too close to 90°.

Optionally, as shown in FIG. 6 and FIG. 7, in the embodiment of the present application, a fillet is provided at an intersection of the first surface 231 and the second surface 232, so as to avoid stress concentration at the intersection of the first surface 231 and the second surface 232 and also avoid stress concentration at the intersection of the first edge part 221 of the cover plate 22 and the cover plate body part 222, thereby improving the strength of the reinforcing member 23 and the cover plate 22.

Optionally, as shown in FIG. 6 and FIG. 7, a range of a radius r of the fillet at the intersection of the first surface 231 and the second surface 232 may be set according to actual applications. For example, a range of a radius r of the fillet is [0.5mm, 2mm], which avoids stress concentration due to too small radius r of the fillet, and also avoids excessive gap between the fillet of the reinforcing member 23 and the cover plate 22 due to too large radius r of the fillet, thereby causing a waste of space and possibly reducing the strength of the reinforcing member 23.

In an embodiment of the present application, the size of the reinforcing member 23 may be set according to actual applications. For example, as shown in FIG. 6 and FIG. 7, the reinforcing member 23 can satisfy the following condition: a length of the first surface 231 in a first direction X is greater than a length of the inner surface 241 of the crimping structure 24 in the first direction X, where the first direction X is parallel to the first surface 231 and perpendicular to an intersection line of the first surface 231 and the second surface 232. In this way, the strength of the reinforcing member 23 can be increased. On the contrary, if the maximum internal pressure of the battery cell 20 is relatively small, the requirement for the strength of the reinforcing member 23 is relatively small, and the length of the first surface 231 in the first direction X may also be set to be smaller than or equal to the length of the inner surface 241 of the crimping structure 24 in the first direction X, so as to reduce the weight of the reinforcing member 23, and further reduce the weight of the battery cell 20.

It should be understood that the specific shape of the reinforcing member 23 of the embodiment of the present application may be flexibly set according to practical applications. Hereinafter, the shape of the reinforcing member 23 will be described in detail with reference to the accompanying drawings.

In an embodiment of the present application, a third surface 233 and the second surface 232 of the reinforcing member 23 intersect, and an included angle *θ*₂ between the third surface 233 and the second surface 232 of the reinforcing member 23 can be set according to practical applications. For example, as shown in FIG. 7, a range of the included angle *θ*₂ between the third surface 233 and the second surface 232 is [80°, 90°], so as to increase the stability and strength of the reinforcing member 23. For another example, different from this, FIG. 8 shows another possible schematic partial cross-sectional view of a reinforcing member 23 according to an embodiment of the present application, where this schematic partial cross-sectional view may be a schematic partial cross-sectional view of the reinforcing member 23 along a plane passing through a central axis 201 of a battery cell 20. As shown in FIG. 8, the included angle *θ*₂ between the third surface 233 and the second surface 232 may also be an obtuse angle, so as to reduce the weight of the reinforcing member 23.

Optionally, the shape of a cross section of the reinforcing member 23 along a first plane can be set according to the actual application, where the first plane passes through the central axis 201 of the battery cell 20. For example, the cross section of the reinforcing member 23 along the first plane is substantially a polygon. In order to avoid stress concentration, the reinforcing member 23 may include a fillet design. Therefore, the cross section of the reinforcing member 23 along the first plane may be a polygon with a fillet or substantially be a polygon. The cross section of the reinforcing member 23 along the first plane is generally not a circle or an ellipt, which can avoid movement of the reinforcing member 23 and improve the stability of the reinforcing member 23.

Specifically, the polygon may have a regular or irregular shape. For example, the polygon may be a triangle to facilitate processing. Alternatively, as shown in FIG. 7, the polygon may also be a quadrangle to improve the stability of the reinforcing member 23. Alternatively, as shown in FIG.8, the polygon may also be approximately a pentagon, and the embodiment of the present application is not limited thereto.

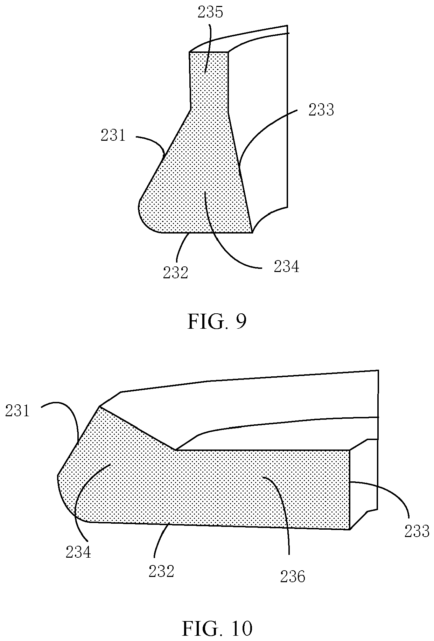

Optionally, the reinforcing member 23 in the embodiment of the present application may also have other regular or irregular shapes. For example, FIG. 9 and FIG. 10 show other possible partial schematic cross-sectional views of a reinforcing member 23 according to an embodiment of the present application, where this schematic cross-sectional view may be a partial schematic cross-sectional view of the reinforcing member 23 along a plane passing through a central axis 201 of a battery cell 20. As shown in FIG. 9, the reinforcing member 23 includes a reinforcing member body part 234 and an extension part 235 that are connected, the reinforcing member body part 234 is located between the inner side of the crimping structure 24 and the cover plate body part 222, and the extension part 235 extends outwards from the reinforcing member body part 234 in a direction of a central axis 201 of the battery cell 20, and thus, the stability and strength of the reinforcing member 23 are increased by the extension part 235.

For another example, as shown in FIG. 10, the reinforcing member 23 may also include a reinforcing member body part 234 and an extension part 235 that are connected to each other, the reinforcing member body part 234 is located between the inner side of the crimping structure 24 and the cover plate body part 222, the extension part 236 extends outward from the reinforcing member body part 234 in the direction of the central axis 201 of the battery cell 20, and the extension part 236 also increases the stability and strength of the reinforcing member 23.

Therefore, the battery cell 20 of an embodiment of the present application is provided with a reinforcing member 23, and at least part of the reinforcing member 23 is located between the crimping structure 24 and the cover plate body part 222, such that the reinforcing member 23 can resist at least part of the pressure when the pressure of the inner portion of the battery cell 20 against the cover plate 22 increases due to the swelling of the inner portion of the battery cell 20, thereby reducing the pressure directly acting on the crimping structure 24, and increasing the pressure resistance of the crimping structure 24, so as to improve the safety of the battery cell 20. For example, for a cylindrical battery cell with a diameter of 64 mm, if the reinforcing member 23 is not provided, the compressive strength of the crimping structure is generally only 0.8Mpa to 0.9Mpa, and the compressive strength of a pressure relief mechanism provided by means of indentation is generally 1.7Mpa, which is higher than the compressive strength of the crimping structure, therefore, when the internal pressure of the battery cell 20 exceeds an upper limit of the compressive strength of the crimping structure, the crimping structure may fail prior to the pressure relief mechanism, which in turn leads to the failure of the battery cell. However, the reinforcing member 23 added between the crimping structure 24 and the cover plate body part 222 can resist part of the pressure, and the crimping structure 24 may fail only when the reinforcing member 23 fails, thereby improving the pressure resistance of the crimping structure 24, and it can also make the pressure relief mechanism fail prior to the crimping structure, thereby improving the safety of the battery cell 20.

While the present application has been described with reference to preferred embodiments, various improvements may be made and equivalents may be used to substitute parts therein without departing from the scope of the present application. In particular, as long as there is no structural conflict, technical features mentioned in various embodiments can be combined in any manner. The present application is not limited to the specific embodiments disclosed herein, but includes all technical solutions falling within the scope of the claims.

## Claims

1. A battery cell, comprising:
a housing (21);
a cover plate (22), comprising a cover plate body part (222) and a first edge part (221), wherein the housing (21) and the first edge part (221) are connected in a sealing manner and form a crimping structure (24) turned outwards; and
a reinforcing member (23), disposed on a side of the cover plate body part (222) away from an inner portion of the battery cell, at least part of the reinforcing member (23) being located between an inner side of the crimping structure (24) and the cover plate body part (222).

2. The battery cell according to claim 1, wherein the reinforcing member (23) is in contact with an inner surface (241) of the crimping structure (24).

3. The battery cell according to claim 1 or 2, wherein the reinforcing member (23) is ring-shaped.

4. The battery cell according to any one of claims 1 to 3, wherein a cross section of the reinforcing member (23) along a first plane is substantially a polygon, and the first plane passes through a central axis of the battery cell.

5. The battery cell according to claim 4, wherein the polygon is a triangle or a quadrangle.

6. The battery cell according to any one of claims 1 to 5, wherein the reinforcing member (23) comprises a reinforcing member body part (234) and an extension part (235) that are connected, the reinforcing member body part (234) is located between the inner side of the crimping structure (24) and the cover plate body part (222), and the extension part (235) extends outwards from the reinforcing member body part (234) in a direction of a central axis of the battery cell.

7. The battery cell according to any one of claims 1 to 6, wherein the reinforcing member (23) is a solid structure.

8. The battery cell according to any one of claims 1 to 7, wherein a first surface (231) of the reinforcing member (23) is parallel to an inner surface (241) of the crimping structure (24), a second surface (232) of the reinforcing member (23) is parallel to the cover plate body part (222), and a range of an included angle between the first surface (231) and the second surface (232) is (0°, 60°].

9. The battery cell according to claim 8, wherein a fillet is provided at an intersection of the first surface (231) and the second surface (232).

10. The battery cell according to claim 9, wherein a range of a radius of the fillet is [0.5mm, 2mm],

11. The battery cell according to any one of claims 8 to 10, wherein a third surface (233) and the second surface (232) of the reinforcing member (23) intersect, and a range of an included angle between the third surface (233) and the second surface (232) is [80°, 90°].

12. The battery cell according to any one of claims 8 to 11, wherein a length of the first surface (231) in a first direction is greater than a length of the inner surface (241) of the crimping structure (24) in the first direction, the first direction is parallel to the first surface (231) and perpendicular to an intersection line of the first surface (231) and the second surface (232).

13. The battery cell according to any one of claims 8 to 12, wherein the first surface (231) of the reinforcing member (23) is deformed to be parallel to a central axis of the battery cell when a pressure of the inner portion of the battery cell against the reinforcing member (23) is greater than or equal to 0.5 MPa.

14. The battery cell according to any one of claims 1 to 13, wherein a material of the reinforcing member (23) comprises at least one of aluminum alloy, steel, and titanium alloy.

15. The battery cell according to any one of claims 1 to 14, wherein the housing (21) comprises a housing body part (212) and a second edge part (211), the second edge part (211) is close to an opening of the housing (21), and the second edge part (211) and the first edge part (221) are wound to form the crimping structure (24).

16. The battery cell according to claim 15, wherein the crimping structure (24) comprises a converging part (242) and a winding part (243); the first edge part (221) and the second edge part (211) converge and are connected at the converging part (242); and the winding part (243) is connected to the converging part (242), and is wound outwards from the converging part (242) to form the winding part (243).

17. The battery cell according to claim 16, wherein a first surface (231) of the reinforcing member (23) is in contact with an inner surface of the converging part (242).

18. The battery cell according to any one of claims 1 to 17, wherein a portion of the housing body part (212) close to the second edge part (211) is provided with a stepped part (213) extending towards a central axis of the housing (21), and the stepped part (213) is configured such that a maximum distance from the crimping structure (24) to the central axis of the housing (21) is less than or equal to a maximum distance from the housing body part (212) to the central axis of the housing (21).

19. The battery cell according to claim 18, wherein a sealant is filled between the first edge part (221) and the second edge part (211).

20. The battery cell according to any one of claims 1 to 19, wherein the housing (21) is of a hollow structure with openings at two ends, the battery cell comprises two cover plates (22), and the two cover plates (22) are configured to cover the openings at the two ends respectively.

21. The battery cell according to any one of claims 1 to 20, wherein the battery cell is a cylinder, the cover plate (22) is a circle, and the reinforcing member (23) is in a shape of a circular ring.

22. A battery, comprising:
a plurality of battery cells, wherein a battery cell is the battery cell according to any one of claims 1 to 21.

23. A power consumption device, comprising:
the battery cell according to any one of claims 1 to 21, wherein the battery cell is configured to provide electric energy for the power consumption device.
